# EUROPEAN PATENT APPLICATION

(11) **EP 3 598 770 A1**
(43) Date of publication of application: **22.01.2020**
(21) Application number: 18777880.8
(22) Date of filing: 29.03.2018
(51) Int. Cl.: H04N 21/466, G06N 5/04

(54) **ELECTRONIC DEVICE FOR DETERMINING EMOTION OF USER AND METHOD FOR CONTROLLING SAME**

(30) Priority: 31.03.2017 KR 20170041774; 29.11.2017 KR 20170162116
(71) Applicant: Samsung Electronics Co., Ltd., Suwon-si, Gyeonggi-do 16677 (KR)
(72) Inventor: YUN, So-jung, Suwon-si, Gyeonggi-do, 16677 (KR); KIM, Ye-hoon, Suwon-si, Gyeonggi-do, 16677 (KR); JANG, Jun-ik, Suwon-si, Gyeonggi-do, 16677 (KR)
(74) Representative: Gulde & Partner
(86) International application number: PCT/KR2018/003735
(87) International publication number: WO 2018/182337

(57) **Abstract**

The present disclosure relates to an artificial intelligence (AI) system utilizing a machine learning algorithm such as deep learning, and application of the same. In particular, a method for controlling an electronic device of the present disclosure comprises the steps of: obtaining image data and supplementary data including data on a user from an external terminal connected to the electronic device; generating feature data for determining the user's actual emotion by using the image data and the supplementary data; and determining the user's actual emotion by inputting the feature data into an emotion recognition model.

## Description

### Technical Field

The disclosure relates to an electronic device and a method for controlling same. More particularly, the disclosure relates to an electronic device capable of analyzing data to determine an emotion of a user, and inferring the cause of occurrence of the emotion, and a method for controlling same.

Further, the disclosure relates to an artificial intelligence (AI) system simulating functions such as cognition, determination and the like, of a human brain using a machine learning algorithm such as deep learning and the like, and an application thereof.

### Background Art

The artificial intelligence (AI) system is a computer system which implements intelligence of a human level, which is a system in which a machine learns, determines and gets smart by itself, unlike the existing rules-based smart system. A recognition rate of the artificial intelligence (AI) system can be improved as it is used more and more and user preferences can be more accurately understood. Accordingly, the existing rules-based smart system has been gradually replaced with a deep learning-based artificial intelligence system.

The artificial intelligence technology includes machine learning (for example, deep learning), and element technology utilizing machine learning. The machine learning is an algorithm technology to classify and learn features of input data by itself. The element technology is a technology to utilize a machine learning algorithm such as deep learning and the like, which may include technical fields including linguistic understanding, visual understanding, inference/prediction, knowledge expression, motion control and the like.

Various fields to which the artificial intelligence (AI) technology is applied are shown below. The linguistic understanding is a technology of recognizing languages and characters of human, and applying and processing the recognized human languages and characters, which includes natural language processing, machine translation, dialogue system, question and answer, voice recognition and synthesis, etc. The visual understanding is a technique to recognize an object as if the object were viewed from a human sight, which includes object recognition, object tracking, image search, human recognition, scene understanding, space understanding, image improvement and the like. The inference and prediction is a technique of identifying information to perform logical inference and prediction, which includes knowledge/probability-based inference, optimization prediction, preference-based planning, recommendation, etc. The knowledge expression is a technique of performing automation processing with respect to experience information of human with knowledge data, which includes knowledge construction (data generation/classification), knowledge management (data usage) and the like. The motion control is a technique of controlling autonomous driving of a vehicle, a robot motion and the like, which includes a motion control (navigation, collision and driving), manipulation control (behavior control), etc.

Meanwhile, in related art, an emotional state of the user is determined by analyzing a facial expression of the user whose emotion is to be determined. However, there is a case where the emotion from analyzing the user face and the actual emotion of the user are different from each other. That is, the user's facial expression is angered, but the actual user's feeling may be happy, and the user's facial expression is smiling, but the actual user's feeling may be sad. As described above, when emotion is determined by analyzing only a facial expression of the user, there may be a case where the actual emotion of the user cannot be accurately identified.

### Detailed Description of Invention

### Technical Problem

The disclosure is a resolution of such aforementioned problems, that is, to provide an electronic device which is capable of analyzing a facial expression of a user whose emotion is to be determined and simultaneously, analyzing surrounding environment information of the user together to determine the actual emotion of the user, and a method for controlling same.

### Solution Means to Problem

A method for controlling an electronic device according to an embodiment of the disclosure to achieve the above-mentioned purpose includes obtaining image data and supplementary data including a user from an external terminal connected to the electronic device, generating feature data for determining the user's actual emotion by using the image data and the supplementary data, and determining the user's actual emotion by inputting the feature data into an emotion recognition model.

The supplementary data may include at least one of GPS information, orientation information and hash tag information of the image, pre-inputted information on the user, past emotion of the user, and crawling information on the image.

The feature data may include first feature data and second feature data. The first feature data may be feature data which is related to an emotion of the user excluding peripheral information. The second feature data may be feature data on peripheral information of the user.

The determining may include determining the user's emotion by inputting the first feature data into an emotion recognition model, and determining the peripheral information by inputting the second feature data into an emotion recognition model, and determining the user's actual emotion by analyzing the determined user's emotion for the first feature data and the peripheral information on the second feature data.

The determining the emotion may include calculating a weight for past emotion of the user, and determining a current emotion of the user by using the feature data and the weight.

The method may include classifying the feature data by time or location, and storing them in a memory.

The method may include, in response to a user request being received from the external terminal, determining a cause of occurrence of the user's emotion by inputting the feature data into an emotion inference model, and providing the determined emotion occurrence cause to the external terminal.

The determining may include determining a cause of occurrence of the user's emotion by time, location, character, or event.

An electronic device according to an embodiment of the disclosure to achieve the above-mentioned purpose includes a communication unit for receiving image data and supplementary data including a user from an external terminal connected to the electronic device, a processor for determining the user's actual emotion by using the image data and the supplementary data, and determining the user's actual emotion by inputting the feature data into an emotion recognition model, and a memory for storing the feature data.

The supplementary data may include at least one of GPS information, orientation information and hash tag information of the image, pre-inputted information on the user, past emotion of the user, and crawling information on the image.

The feature data may include first feature data and second feature data. The first feature data may be feature data which is related to an emotion of the user excluding peripheral information. The second feature data may be feature data on peripheral information of the user.

The processor may determine the user's emotion by inputting the first feature data into an emotion recognition model, determine the peripheral information by inputting the second feature data into an emotion recognition model, and determine the user's actual emotion by analyzing the determined user's emotion for the first feature data and the peripheral information on the second feature data.

The processor may calculate a weight for past emotion of the user, and determine a current emotion of the user by using the feature data and the weight.

The processor may classify the feature data by time, location, character, or event, and transmit them to a memory.

The processor may, in response to a user request being received from the external terminal, determine a cause of occurrence of the user's emotion by inputting the feature data into an emotion inference model, and provide the determined emotion occurrence cause to the external terminal.

The processor may determine a cause of occurrence of the user's emotion by time or location.

Meanwhile, in a non-transitory computer readable medium storing programs to execute a method for controlling an electronic device according to an embodiment of the disclosure, the method for controlling the electronic device includes obtaining image data and supplementary data including a user from an external terminal connected to the electronic device, generating feature data for determining the user's actual emotion by using the image data and the supplementary data, and determining the user's actual emotion by inputting the feature data into an emotion recognition model.

### Effect of Invention

As described above, according to the embodiments of the disclosure, a user's emotion can be more accurately determined using peripheral information, and a cause of the emotion can be inferred through feature data.

### Brief Description of Drawings

FIGS. 1A and 1B are diagrams to explain a configuration of an electronic device 100, according to an embodiment of the disclosure.
FIG. 2 is a block diagram to explain determination of the user's actual emotion and inference of a cause of the emotion, according to an embodiment of the disclosure.
FIG. 3 is a diagram to explain a method for determining emotion, according to an embodiment of the disclosure.
FIGS. 4A and 4B are diagrams to explain a method for analyzing a user's emotion using peripheral information.
FIGS. 5A and 5B are diagrams to explain an emotion cause analysis, according to an embodiment of the disclosure.
FIG. 6 is a diagram to explain a process of determining an actual emotion of a user and a cause of the emotion, according to another embodiment of the disclosure.
FIG. 7 is a flowchart to explain a method for controlling the electronic device 100, according to an embodiment of the disclosure.
FIG. 8 is a sequence diagram to explain a method for controlling a system for inferring determination of a user's emotion and analysis of cause of the emotion, according to an embodiment of the disclosure.
FIG. 9 is a diagram to explain a user terminal for performing emotion determination and emotion cause analysis, according to another embodiment of the disclosure.
FIG. 10 is a block diagram of a processor, according to some embodiments of the disclosure.
FIGS. 11A and 11B are block diagrams of a data learning unit and an emotion determination unit, according to some embodiments of the disclosure.

### Best Mode for Carrying Out the Invention

The terms used in the description will be described briefly and the present invention will be described in greater detail.

The terms used in the example embodiments of the present disclosure are general terms which are widely used now and selected considering the functions of the present disclosure. However, the terms may vary depending on the intention of a person skilled in the art, a precedent, or the advent of new technology. In addition, in a special case, terms selected by the applicant may be used. In this case, the meaning of the terms will be explained in detail in the corresponding detailed descriptions. Therefore, the terms used in the present disclosure should be defined based on the meanings of the terms and the descriptions made herein, rather than the names of the terms.

The embodiments may vary, and may be provided in different exemplary embodiments. Specific embodiments will be described with reference to accompanying drawings and detailed description. However, this is not intended to limit the scope to an exemplary embodiment, and therefore, it should be understood that all the modifications, equivalents or substitutes included under the invented spirit and technical scope are encompassed. While describing embodiments, if it is determined that the specific description regarding a known technology obscures the gist of the disclosure, the specific description is omitted.

The terms such as "first," "second," and so on may be used to describe a variety of elements, but the elements should not be limited by these terms. The terms are used only to distinguish one element from another.

Singular forms are intended to include plural forms unless the context clearly indicates otherwise. In the present application, the terms "include" and "comprise" designate the presence of features, numbers, steps, operations, components, elements, or a combination thereof that are written in the specification, but do not exclude the presence or possibility of addition of one or more other features, numbers, steps, operations, components, elements, or a combination thereof.

In an exemplary embodiment, 'a module' or 'a unit' performs at least one function or operation, and may be realized as hardware, software, or combination thereof. Further, a plurality of 'modules' or a plurality of 'units' are integrated into at least one module except for the 'module' or 'unit' which needs to be implemented by specific hardware and thus may be implemented by at least one processor.

In an embodiment of the present invention, it will be understood that, when an element is "connected" with another element, the element may be "directly connected" with another element, and also, the element may be "electrically connected" with another element with an intervening element therebetween. In addition, it includes not only a physical connection but also a wireless connection. In addition, it will be understood that, when a certain part "includes" a certain element, the certain part may not exclude another element and may further include another element unless this term is defined otherwise.

Hereinbelow, certain embodiments will now be described in greater detail with reference to the accompanying drawings to enable those skilled in the art to work the same with ease. However, embodiments may be realized in a variety of different configurations, and not limited to descriptions provided herein. Further, those that are irrelevant with the description are omitted so as to describe embodiments more clearly, and similar drawing reference numerals are used for the similar elements throughout the description.

In this disclosure, the term "a user" may indicate a person using an electronic device or a device which uses an electronic device (for example, artificial intelligent electronic device).

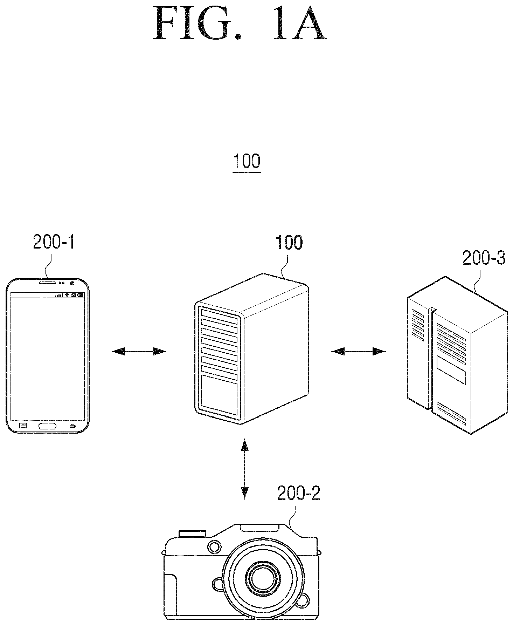

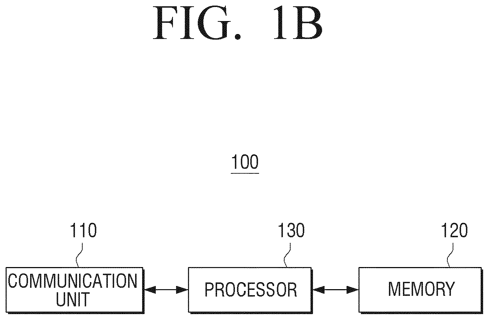

FIGS. 1A and 1B are diagrams to explain a configuration of an electronic device 100, according to an embodiment of the disclosure.

The electronic device 100 may be implemented as a server and interlocked with an external terminal 200-1 through 200-3, and provide a user emotion analysis service, as illustrated in FIG. 1.

As illustrated in FIG. 1B, the electronic device 100 includes a communication unit 110, a memory, and a processor 130.

The communication unit 110 receives data for analyzing a user's emotion from various external terminals. Specifically, the communication unit 100 may receive data for analyzing a user's emotion from various external terminals such as an external user terminal 200-1, an external server 200-2, an external photographing device 200-3 or the like.

In this case, the data received from the outside may include image data and supplementary data. Specifically, the image data may be a photo and video data received from the external photographing device 200-3. In this case, if the image data is video data, the image data may include audio data included in the video data.

The supplementary data refers to data related to image data. For example, the supplementary data may be configured in various forms such as information on conversation of people included in the image data, GPS information included in the image data, orientation information, hash tag information, pre-inputted information about the user, user's past emotion information determined from the electronic device 100, information acquired by crawling images, and the like. However, the supplementary data is not limited to the examples mentioned above, and may include various data that are determined to be necessary to determine a user's emotion.

The memory 120 may store various operating systems (O/S) for driving the electronic device 100, and various software programs or applications for operating the electronic device 100 may be stored.

The memory 120 may store feature data. In this case, the feature data refers to data which is generated using image data and supplementary data. A detailed description thereon will be provided below. Alternatively, the memory 120 may store image data and supplementary data as needed.

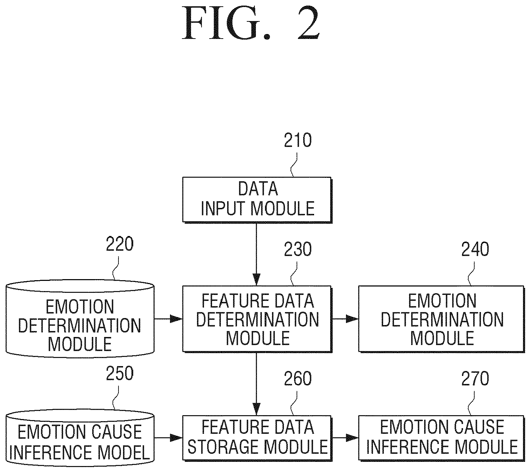

Meanwhile, the memory 120 may include a plurality of software modules for performing determination of a user's emotion and analysis of cause of the emotion. Specifically, the memory 120 may include, as illustrated in FIG. 2, a data input module 210, a feature data determination module 230, an emotion determination module 240, a feature data storage module 260, and an emotion cause inference module 270.

The data input module 210 may obtain image data of various forms from an external terminal.

The feature data determination module 230 may determine feature data by analyzing input data. Specifically, the feature data determination module 230 may determine the feature data by using an emotion recognition model 220.

The emotion determination module 230 may actual the user's actual emotion from the feature data. Although not illustrated in FIG. 2, the user's actual emotion may be obtained by applying the feature data into the emotion recognition model 220.

The feature data storage module 240 may store the generated feature data.

The emotion inference module 270 may determine the cause of occurrence of the user's emotion. For example, the emotion inference module 270 may identify the cause of occurrence of the emotion by applying the feature data into an emotion inference model 250.

The processor 130 may control the above-described elements of the electronic device 100. For example, the processor 130 may determine the user's actual emotion by using a plurality of software modules stored in the memory 120 or may determine a cause of the user's emotion.

Specifically, the processor 130 may generate feature data for determining the user's emotion by using the image data and the supplementary data. In addition, the processor 130 may control the emotion determination module 240 to determine the user's actual emotion by inputting the generated feature data to the emotion recognition model.

The processor 130 may control the feature data determine module 230 to generate feature data including first feature data and second feature data by using the image data and the supplementary data. In this case, the first feature data may be data which is related to a user whose emotion is to be determined. For example, the processor 130 may control the feature data determination module 230 to detect a user's facial expression from the image data, and determine an emotion corresponding to the detected user's facial expression as first feature data. In this case, the detected user's emotion (the first feature data) may be different from the actual emotion that the user feels. For example, the actual user's feeling is "happy", but the emotion corresponding to the first feature data may be "angry".

Meanwhile, second feature data may be feature data excluding the first feature data. For example, the second feature data may be emotion information that is determined from facial expressions of characters surrounding the user included in the image. Alternatively, it may be related to the emotions of a talker and a conversation partner determined from the conversation contents included in the image. Alternatively, it may be about the place where the image is photographed and the emotions that are felt by people statistically in the corresponding place.

As described above, the feature data may be data that is related to the emotion of the user or characters surrounding the user from among the inputted image data and supplementary data. However, the feature data is not limited thereto, and may include various information other than emotion. For example, the feature data may include various information such as various objects surrounding the user, context, weather, time information, and the like.

In this case, the feature data may have less capacity as compared with the image data and the supplementary data. That is, only data that are required to determine the user's emotion from among various input data are generated as feature data and thereby, the processor 130 may use a storage space allocated to the memory.

Meanwhile, the processor 130 may determine the user's actual emotion by inputting the first feature data and the second feature data into the emotion recognition model. For example, the processor 130 may determine a user's emotion with respect to the first feature data by inputting the first feature data into the emotion recognition model. Here, the determined emotion may be different from the user's actual emotion. In addition, the processor 130 may determine an emotion about surrounding characters and other peripheral information by inputting the second feature data into the emotion recognition model. The processor 130 may determine the user's actual emotion on the basis of information on the determined user's emotion about the first feature data and the peripheral information on the second feature data.

However, the example is not limited thereto, and the user's actual emotion may be determined by applying the first feature data and the second feature data to the emotion recognition model at the same time.

In this case, when the user's actual emotion is determined, the processor 130 may calculate a weight with respect to a user's past emotion, and determine the user's current emotion by using the calculated weight. This will be explained below.

In addition, the processor 130 may classify the feature data according to a specific category and store the classified feature data in the memory 120. For example, the processor 130 may classify the feature data according to the passage of time and store the classified feature data in the memory 120. In addition, the processor 130 may classify the feature data by location and store the classified feature data in the memory 120. In the example described above, the feature data are classified by time and location. However, the feature data may be classified according to various categories.

Meanwhile, when a user request is received from an external device, the processor 130 may determine the cause of occurrence of the user's emotion by inputting the feature data into the emotion inference model, and provide the determined cause to the external terminal. For example, if the user's actual emotion is "angry", the processor 130 may analyze the cause of the user's anger from the feature data and provide the analyzed cause to the user.

In addition, the processor 130 may determine the user's actual emotion and the cause of occurrence of the emotion by time, location, character or event. If a user request is present, the processor 130 may provide emotion and cause information to the user. For example, when the user requests emotions and the causes of the emotions organized by time, the processor 130 may provide the user with the emotions and the cause of occurrence of the emotions over time. Accordingly, the user can identify the user's emotional state and the cause of occurrence of the emotion by time.

Alternatively, when the user requests emotions and the causes of the emotions organized by location, the processor 130 may provide the user with the emotions and the cause of occurrence of the emotions by location.

Alternatively, when the user requests emotions and the causes of the emotions organized by character, the processor 130 may provide the user with the emotions and the cause of occurrence of the emotions for a specific person. Specifically, the processor 130 may, when the user is accompanied by a specific person, provide the user with information on the user's emotion and the cause of occurrence of the emotion.

Alternatively, when the user requests emotions and the causes of the emotions organized by event, the processor 130 may provide the user with the emotions and the cause of occurrence of the emotions about a specific event. Specifically, the processor 130 may, when a specific event has occurred, provide the user with information on the user's emotion and the cause of occurrence of the emotion.

In addition, according to the various embodiments of the disclosure, the electronic device 100 may obtain feature data from inputted image data and supplementary data, and determine emotion data by analyzing the obtained feature data. In the present disclosure, a learned recognition model may be constructed in consideration of a field of application of the recognition model, a computer performance of a device, or the like. A learned object recognition model may be, for example, a model based on a neural network. The learned object recognition model may be designed to simulate a human brain structure on the computer and may include a plurality of network nodes having a weight for simulating neurons of a human neural network. The plurality of network nodes may respectively form a connection relationship so as to simulate a synaptic activity of neuron in which neurons exchange signals through synapse. In addition, the object recognition model may include, for example, a neural network model, or a deep learning model advanced from the neural network model. In the deep learning model, the plurality of network nodes may be located at different depths (or layers), and exchange data according to a convolutional connection relationship. For example, models such as Deep Neural Network (DNN), Recurrent Neural Network (RNN), Bidirectional Recurrent Deep Neural Network (BRDNN), etc. may be used as an object recognition model, but is not limited thereto. Specific examples of application of the object recognition model described above will be described below.

In addition, the electronic device 100 may use an artificial intelligence agent to perform the task as described above. In this case, the artificial intelligence agent is a program used exclusively for providing an artificial intelligence (AI)-based service (for example, voice recognition service, secretary service, translation service, search service, etc.), which may be executed by a universal processor (for example, a CPU) or an additional processor exclusive for AI (for example, a GPU, etc.).

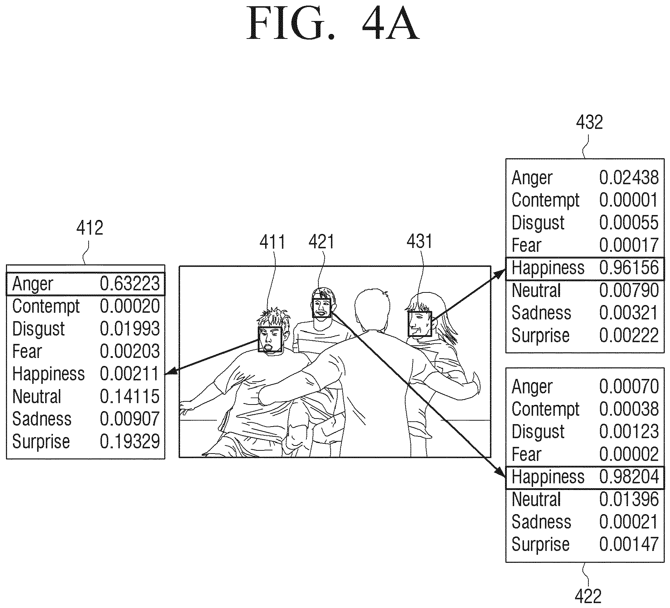

FIGS. 4A to 6 are diagrams to explain various embodiments of the disclosure.

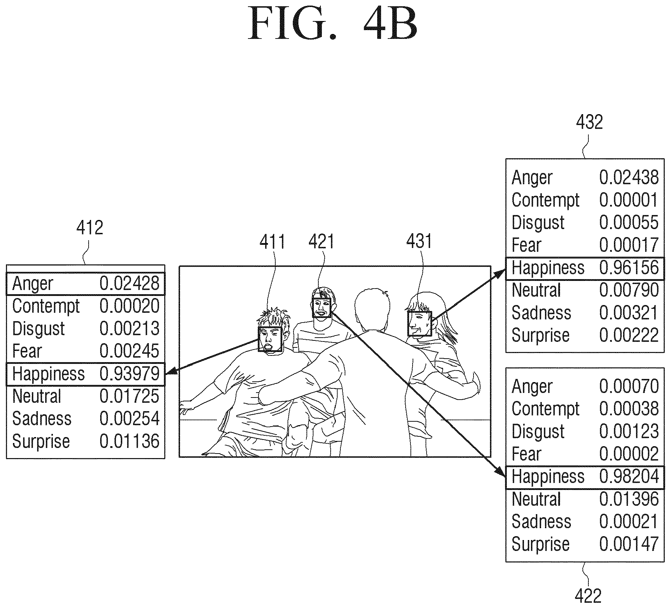

FIGS. 4A and 4B are diagrams to explain a method for analyzing a user's emotion using peripheral information. Specifically, FIGS. 4A and 4B are diagrams to explain a process of determining an emotion of a user 411 using photo data for which soccer players of a soccer match champion is photographed.

The processor 130 may generate feature data from the photo data by controlling the feature data determination module 230. For example, the processor 130 may control the feature data determination module 230, and determine a user's emotion through image analysis. In this case, the processor 130 may determine emotion by controlling the feature data determination module 230 and analyzing facial expressions of the user 411 and surrounding characters 421 and 431 of which an emotion is to be determined.

Specifically, as illustrated in FIG. 4A, the processor 130 may generate an emotion table 412 by controlling the feature data determination module 230 and analyzing a facial expression of the user 411. In this case, the emotion of the user 411 is "anger". In addition, referring to the surrounding characters 421 and 431 and the emotion tables 422 and 432 of the surrounding characters, the emotional state of the surrounding characters is "happiness". In this case, the emotional states of the user and the surrounding characters 411, 421 and 431 are feature data, and the feature data may be stored in the feature data storage module 260. Specifically, data for "anger" of the user 411 may be first feature data, and data for "happiness" of the surrounding characters 421 and 431 may be second feature data.

The processor 130 may control the emotion determination module 240 and analyze acquired feature data, and determine the actual emotion of the user 411. Specifically, the processor 130 may control the emotion determination module 240, and determine the emotion of the user 411 by inputting the feature data into the emotion recognition model 220. In this case, the processor 130 may control the emotion determination module 240, and determine that the user 411 is in a state of happiness by using feature data related to the surrounding characters 421 and 422. Specifically, the processor 130 may control the emotion determination module 240 and determine that the emotion of the user 411 is "happiness" including peripheral information as illustrated in FIG. 4B.

In the embodiment described above, an emotion of the user 411 is analyzed using only the facial expressions of the user and the surrounding characters 411, 421 and 431, but is not limited thereto. For example, the first feature data and the second feature data may be determined not only from facial expressions but also from various data such as a gaze direction, an action, a surrounding context, a surrounding noise, a place, a conversation contents, and the like.

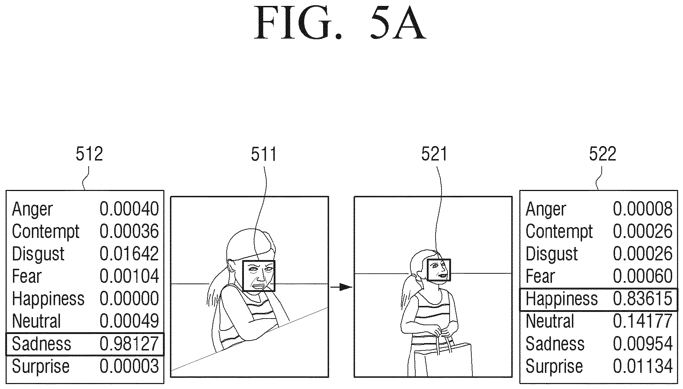

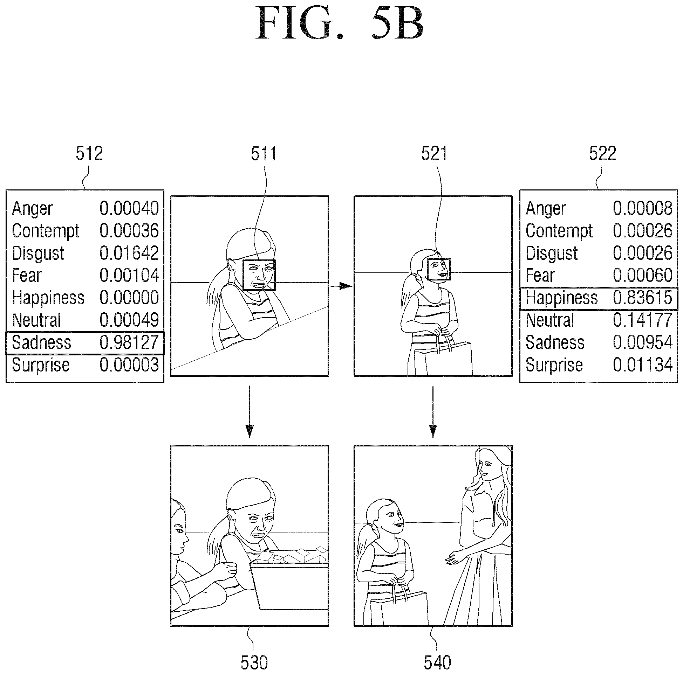

FIGS. 5A and 5B are diagrams to explain an emotion cause analysis, according to an embodiment of the disclosure.

Specifically, FIG. 5A is a diagram illustrating an emotion of a user which is determined by the electronic device 100. Specifically, referring to an emotion table 512 of a user 511, it can be understood that the user 511 is in a state of "sadness". Specifically, referring to an emotion table 522 of a user 521, it can be understood that the user 521 is in a state of "happiness".

In this case, when a request of a user is present, the electronic device 100 may analyze an emotion cause of the users 511 and 521. Specifically, the processor 130 may control the emotion inference module 270 to determine the emotion cause. Specifically, the user's emotion cause may be inferred by inputting the feature data stored in the feature data storage module 260 into the emotion cause inference model 250. For example, the processor 130 may analyze feature data related to a specific emotion to determine an emotion cause. That is, the processor 130 may determine the emotion cause by using only data of a small size stored in the feature data storage module 260.

Specifically, as illustrated in FIG. 5B, the processor 130 may, corresponding to a cause of sadness of the user 511, provide an image 530 in which a friend of the user 511 is aggravating the user 511, and corresponding to a reason why the user 521 is happy, provide an image 540 in which the user 521 receives a present.

Meanwhile, as described above, the processor 130 may, when a user request is present, classify a user's emotion and an emotion occurrence cause by specific categories and provide the same to the user. In this case, the specific categories may be related to a time, a place, a character or an event, and may be various other categories. For example, the category may be a variety of cases such as when the user is accompanied by a specific character, when the user is watching a specific broadcasting, when the user is accessing a specific website, and the like. However, the example is not limited to the embodiments described above, and the user's emotion and the emotion occurrence cause may be classified by various category types.

Meanwhile, when the user requests information on emotion and emotion cause over time, the processor 130 may provide the user's emotion and the emotion occurrence cause over time.

In this case, the processor 130 may summarize most distinctive emotions, and provide the summarized emotions to the user. For example, the processor 130 may provide the user with the angriest, the most excited, the happiest, the saddest, etc. during the day. However, the example is not limited to the embodiments described above, and the user's emotion and the emotion occurrence cause may be provided by various methods.

In this case, the information provided to the user may be in the form of image data. However, the information is not limited to the image data, and may be provided as voice data or text data, and the various data described above may be provided together.

For example, when the user requests emotion and emotion cause information, the processor 130 may provide image data as in FIG. 5B. Alternatively, the processor 130 may provide the user with text or voice such as "Jenny had an overall fun day in the kindergarten today, but she cried for a while for a fight with her friend in the block building time. However, in the end, she won the first prize in building blocks and was awarded a prize by the teacher and she was most excited at that time."

Meanwhile, in the embodiment described above, user's emotions are classified as one category, but are not limited thereto. That is, the electronic device 100 may classify the user's emotions by considering a plurality of categories together. For example, when a selected category is time and place, the electronic device 100 may classify user's emotions at a specific place over time.

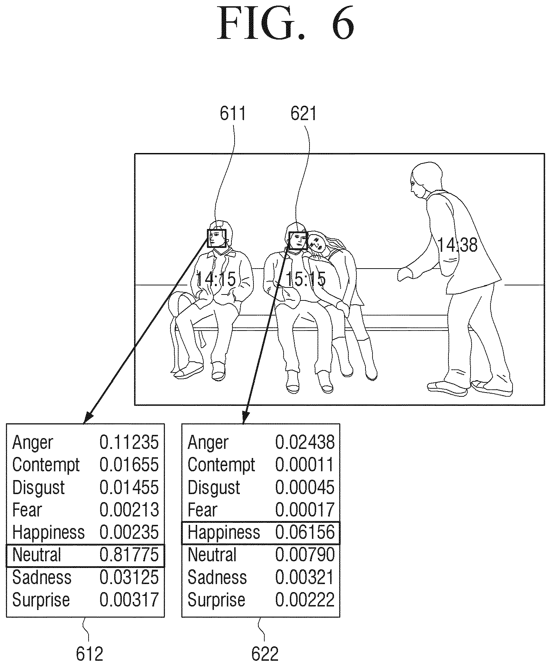

FIG. 6 is a diagram to explain a process of determining an actual emotion of a user and an emotion cause, according to another embodiment of the disclosure. Specifically, FIG. 6 is a diagram to explain a method for determining a user's emotion in the same place over time.

The processor 130 may control the feature data determination module 230 and the emotion determination module 240 to determine a user's emotion. For example, the processor 130 may control the feature data determination module 130 to generate feature data. In this case, the feature data may be data related to a facial expression of the user 611, a place where the user 611 is located, and a time at which an image is photographed. The processor 130 may control the emotion determination module 240 to generate an emotion table 612, and determine that the emotion of the user 611 at 14:15 is "neutral".

In addition, the processor 130 may determine an emotion of a user 621 at 15:15. For example, the processor 130 may control the feature data determination module 130 to generate feature data. In this case, the feature data may be data related to a facial expression of the user 611, a place where the user 611 is located, and a time at which an image is photographed, and may further include past emotions of the user determined in the corresponding place.

The processor 130 may control the emotion determination module 240 to generate an emotion table 622, and determine that the emotion of the user 621 at 15:15 is "happiness".

Meanwhile, as in FIGS. 5A and 5B, the processor 130 may, when a user request is present, classify a user's emotion and an emotion occurrence cause by specific categories and provide the same to the user.

As described above, the processor 130 may provide image data as corresponding to the user request, and provide text or a voice message.

For example, when the user requests emotion and emotion cause information, the processor 130 may provide image data as in FIG. 6. Alternatively, the processor 160 may provide text or a voice such as "John sat on a park bench at 14:15 p.m. today and waited for his girlfriend. At that time, John's emotion is "neutral", but he got happy when he met her at 15:15."

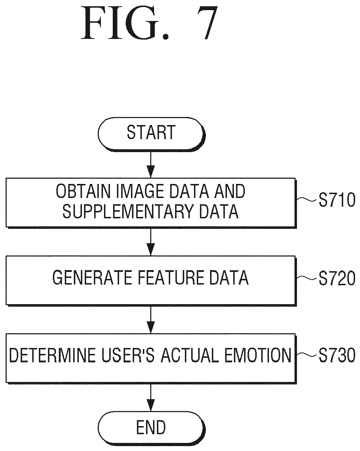

FIG. 7 is a flowchart to explain a method for controlling the electronic device 100, according to an embodiment of the disclosure.

First, the electronic device 100 may receive and obtain image data and supplementary data from an external terminal 200-1 to 200-3, at operation S710.

The electronic device 100 may generate feature data by using the obtained data. Specifically, the processor 130 may control the feature data determination module 130 to generate feature data.

The electronic device 100 may determine the user's actual emotion by inputting the generated feature data into an emotion recognition model.

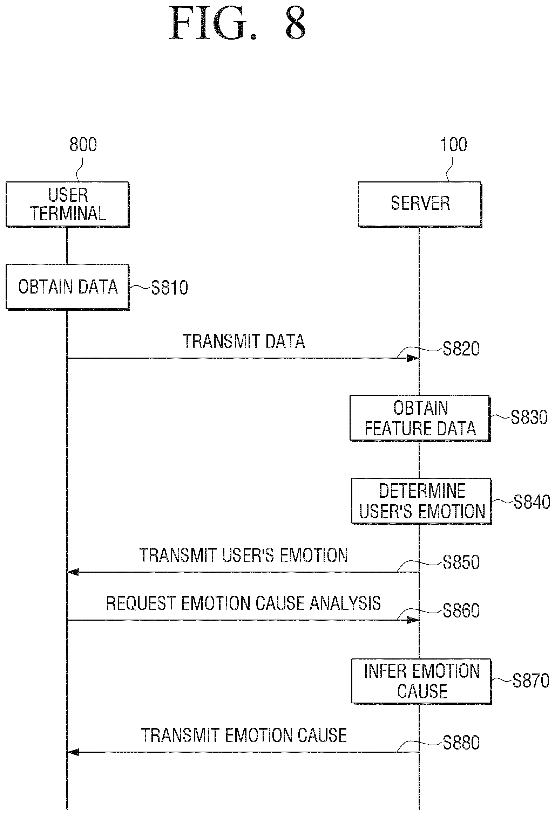

FIG. 8 is a sequence diagram to explain a method for controlling a system for inferring determination of a user's emotion and analysis of cause of the emotion, according to an embodiment of the disclosure. As described above, the electronic device 100 described in FIGS. 1 to 7 may be realized as a server 100.

In this case, a user terminal 800 may include a universal processor, and the server 100 may include a processor used exclusively for artificial intelligence. Alternatively, the user terminal 800 may include at least one application, and the server 100 may include an operating system. The server 100 is an element that is more integrated, dedicated, has less delay, has a better performance or has more resources than the user terminal 800, which may be an element capable of promptly and effectively processing a large amount of calculations required to generate update or apply a recognition model as compared with the user terminal 800.

In this case, an interface for transmitting/receiving data between the user terminal 800 and the server 100 may be defined.

For example, an application program interface (API) having learning data to be applied to a recognition model as a factor value (or an intermediation value or a transfer value) may be defined. The API may be defined as a sub routine or a set of functions capable of being called for a certain processing of another protocol (for example, a protocol defined in the server 100) from any one protocol (for example, a protocol defined in the user terminal 800). That is, an environment in which a task of another protocol may be performed in any one protocol may be provided through the API.

The user terminal 800 obtains data, at operation S810. In this case, the data may include image data and supplementary data.

The user terminal 800 may transmit the obtained data to the server 100 for emotion analysis, at operation S820.

In this case, the server 100 may obtain feature data by using the data received from the user terminal 800, at operation S830. The generated feature data may be stored in the server 100 and may be stored in a memory of the user terminal 800.

The server 100 may determine the user's actual emotion by inputting the feature data into an emotion determination model, at operation S840.

The server 100 may transmit the determined user's emotion to the user terminal 800, at operation S850. In this case, when the user terminal 800 requests emotion cause analysis at operation S860, the server 100 may infer a cause of emotion at operation S870. Specifically, the server 100 may determine the cause of emotion by inputting the feature data into an emotion cause inference model.

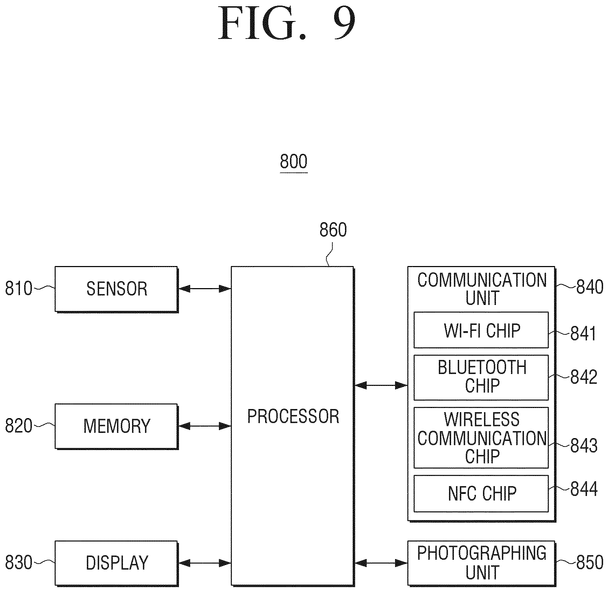

FIG. 9 is a diagram to explain a user terminal for performing emotion determination and emotion cause analysis, according to another embodiment of the disclosure.

In the embodiment described above, the electronic device 100 is realized as a server, and determines the user's actual emotion and analyzes a cause of emotion, but is not limited thereto. Specifically, the electronic device 100 may be configured as the user terminal 800, as illustrated in FIG. 9. For example, the user terminal 800 may be configured as various electronic devices such as a smartphone, a tablet PC, a notebook PC, a desktop PC, a wearable device such as a smart watch, an electronic frame, a humanoid robot, an audio device, a smart TV, and the like, and may solely analyze the user's emotion.

Specifically, as illustrated in FIG. 9, the user terminal 800 may include a sensor 810, a memory 820, a display 830, a communication unit 840, a photographing unit 850, and a processor 860.

The sensor 810 may sense data of various forms. For example, the sensor 810 may include a gyro sensor, a GPS sensor, an accelerometer sensor, an illumination sensor, a humidity sensor, etc. The various sensors mentioned above may sense various data.

The memory 820 may store data which are sensed from the sensor. In addition, the memory may receive feature data from the server 100 and store the same.

The display 830 may display various contents provided on the user terminal 800. In this case, the display 830 may be realized as a Liquid Crystal Display (LCD), an Organic Light Emitting Display (OLED) or a Plasma Display Panel (PDP), etc., and display various screens which can be provided through the user terminal 800.

The communication unit 840 may include at least one of a Wi-Fi chip 841, a Bluetooth chip 842, a wireless communication chip 843, and a near field communication (NFC) chip 844. In a case in which the Wi-Fi chip 841 or the Bluetooth chip 842 is used, various access information such as an SSID, a session key and the like, may be first transmitted and received and a communication access may be performed using the various access information and then, various information may be transmitted and received. The wireless communication chip 843 refers to a chip that performs communication according to various communication standards such as IEEE, Zigbee, 3rd Generation (3G), 3rd Generation Partnership Project (3GPP), Long Term Evolution (LTE), and so on. The NFC chip 844 refers to a chip which is operated in an NFC scheme that uses a band of 13.56MHz among various RF-ID frequency bands such as 135kHz, 13.56MHz, 433MHz, 860 to 960MHz, 2.45GHz, and the like.

The communication unit 840 may perform communication with the server 100 as described above. Specifically, the user terminal 800 may transmit various data to the server 100 via the communication unit, and receive various results from the server 100.

The photographing unit 110 may photograph image data. The photographed image data may be transmitted to the server 100 in order to analyze the user's emotion along with various data sensed from the sensor 810.

The processor 860 controls overall operations of the electronic device. As described above, the processor 860 may determine the user's emotion or analyze a cause of emotion by using the obtained data, and when a request of the server 100 is present, control the communication unit 840 to transmit data of various forms.

Meanwhile, in the various embodiments described in FIGS. 1 to 9, a method for analyzing the user's emotion by analyzing image data is described, but the example is not limited thereto. That is, the user's emotion may be analyzed using audio data instead of image data. For example, the user's emotion may be analyzed by analyzing audio data on the user's call contents, call partner, call contents, etc. Alternatively, the user's emotion may be determined by analyzing various contents written or shared by the user (for example, a writing written or shared on SNS, a shared image and other users tagged to the corresponding image). As described above, in the disclosure, the user's emotion may be determined by analyzing various contents as well as images.

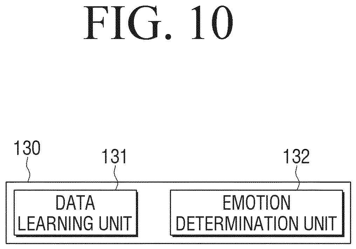

FIG. 10 is a block diagram of a processor, according to some embodiments of the disclosure. Referring to FIG. 10, the processor 130 according to some embodiments may include a data learning unit 131 and an emotion determination unit 132.

The data learning unit 131 may learn criteria for determining a user's emotion. The processor 130 may determine the user's actual emotion by analyzing the input data according to the learned criteria. The data learning unit 131 may determine what data (or feature data) to use in order to determine the user's actual emotion. In addition, the data learning unit 131 may obtain data to be used for learning, and apply the obtained data to an emotion recognition model and an emotion inference model which will be described later, so as to learn criteria for determine the user's actual emotion or the emotion occurrence cause.

The emotion determination unit 132 may determine the user's actual emotion or the emotion occurrence cause from predetermined data by using a pre-learned emotion recognition model and an emotion inference model. The emotion determination unit 132 may obtain predetermined data (for example, feature data) according to preset criteria by learning, and utilize an emotion determination model with the obtained data as an input value. In addition, the emotion determination unit 132 may determine the user's actual emotion by applying the inputted data to the emotion determination model.

At least a part of the data learning unit 131 and at least a part of the emotion determination unit 132 may be implemented as a software module or manufactured in the form of at least one hardware chip and mounted on an electronic device. For example, at least one of the data learning part 131 and the data recognition part 132 may be manufactured as a hardware chip used exclusively for artificial intelligence (AI) or may be manufactured as a part of an existing universal processor (e.g., a CPU or an application processor) or a graphic exclusive processor (e.g., a GPU) and mounted on the various electronic devices described above. In this case, the hardware chip used exclusively for artificial intelligence is an exclusive processor specialized for probability calculation, which shows high parallel processing performance as compared with the existing universal processor and thus, a calculation task in the artificial intelligence field such as machine learning can be quickly processed. When the data learning unit 131 and the data recognition unit 132 are implemented as a software module (or a program module including instructions), the software module may be stored in non-transitory computer readable media. In this case, the software module may be provided by an operating system (OS) or a predetermined application. Alternatively, a part of the software module may be provided by the operating system (OS) and the remaining part may be provided by the predetermined application.

The data recognition model may be established in consideration of an application field of the recognition model, an objective of learning, computer performance of the device and the like. The data recognition model may be, for example, a model based on a neural network. The data recognition model may be designed to simulate a human brain structure on a computer. The data recognition model may include a plurality of network nodes having a weight which simulate neurons of a human neural network. The plurality of network nodes may respectively form a connection relationship so as to simulate a synaptic activity in which neurons exchange signals through synapse. The data recognition model may include, for example, a neural network model or a deep learning model which is advanced from the neural network model. In the deep learning model, the plurality of network nodes may be located at different depths (or layers), and exchange data according to a convolutional connection relationship.

For example, models such as Deep Neural Network (DNN), Recurrent Neural Network (RNN) and Bidirectional Recurrent Deep Neural Network (BRDNN) may be used as a data recognition model, but is not limited thereto.

According to an embodiment of FIG. 10, both the data learning unit 131 and the emotion determination unit 132 are mounted on the electronic device 100, but they may be mounted on a separate device, respectively. For example, one of the data learning unit 131 and the emotion determination unit 132 may be included in the server 100, and the remaining one may be included in the user terminal 800. In addition, the data learning unit 131 and the emotion determination unit 132 may be interconnected via wire or wirelessly, and information on an emotion determination model established by the data learning unit 131 may be provided to the emotion determination unit 132 or data inputted to the emotion determination unit 132 may be provided to the data learning unit 131 as additional learning data.

Meanwhile, at least one of the data learning unit 131 and the emotion determination unit 132 may be realized as a software module. When at least one of the data learning unit 131 and the emotion determination unit 132 is realized as a software module (or a program module including instructions), the software module may be stored in a non-transitory computer readable recording medium. At least one software module may be provided by an operating system (OS) or a predetermined application. Alternatively, part of at least one software module may be provided by an OS, and the remaining part may be provided by a predetermined application.

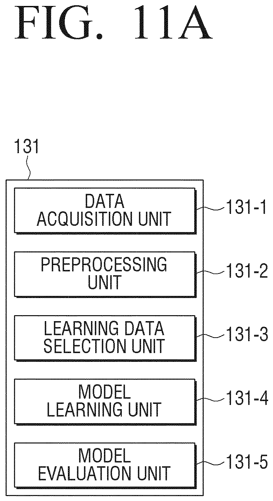

FIG. 11A is a block diagram of the data learning unit 131, according to some embodiments. Referring to FIG. 11A, the data learning unit 131 according to some embodiments may include a data acquisition unit 131-1, a preprocessing unit 131-2, a learning data selection unit 131-3, a model learning unit 131-4, and a model evaluation unit 131-5.

The data acquisition unit 131-1 may obtain data necessary to determine the user's actual emotion. In particular, the data acquisition unit 131-1 may obtain image data, supplementary data, or feature data generated from the image data and the supplementary data as learning data.

The preprocessing unit 131-2 may pre-process the obtained data so that the obtained data may be used in learning for determining the user's actual emotion. The preprocessing unit 131-2 may pre-process the obtained data to a preset format so that the model learning unit 131-4, which will be described later, may utilize the obtained data for learning for determining the user's actual emotion.

The learning data selection unit 131-3 may select data required for learning among the preprocessed data. The selected data may be provided to the model learning unit 131-4. The learning data selection unit 131-3 may select data necessary for learning among the preprocessed data according to preset criteria for determining the user's actual emotion. In addition, the learning data selection unit 131-3 may select data according to preset criteria by learning of the model learning unit 131-4 which will be described later. The model learning unit 131-4 may learn criteria as to how to determine the user's actual emotion based on learning data. In addition, the model learning unit 131-4 may learn criteria as to what learning data to use in order to determine the user's actual emotion.

The model learning unit 131-4 may learn an emotion determination model used to determine the user's actual emotion by using the learning data. In this case, the emotion determination model may be a pre-established model. For example, the emotion determination model may be a model which is pre-established by receiving basic learning data. As another example, the emotion determination model may be a model which is pre-established using big data.

The emotion determination model may be established in consideration of an application field of the recognition model, an objective of learning, computer performance of the device, and the like. The emotion determination model may be, for example, a model based on a neural network. For example, models such as Deep Neural Network (DNN), Recurrent Neural Network (RNN) and Bidirectional Recurrent Deep Neural Network (BRDNN) may be used as an emotion determination model, but is not limited thereto.

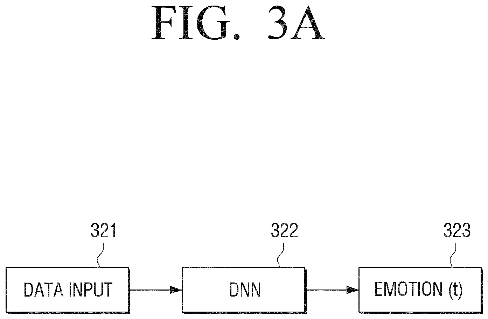

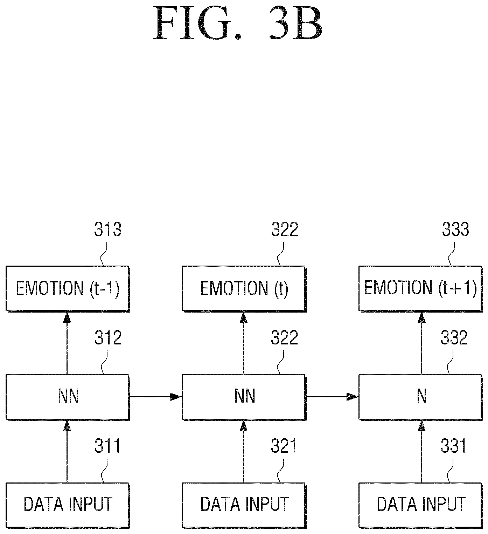

Specifically, an emotion determination module according to the present disclosure may use a DNN model as illustrated in FIG. 3A. However, as illustrated in FIG. 3B, the user's actual emotion may be determined using an RNN model as illustrated in FIG. 3B. Specifically, if by the RNN model, a current emotion (t) 322 may be obtained using past data and past emotion 311 to 313 and a current data input 321. In addition, when a future emotion (t+1) 333 is determined, a data input 331 and the current data input 321 may be used.

According to various embodiments, when a plurality of pre-established emotion determination models are present, the model learning unit 131-4 may determine an emotion determination model with high relevancy between input learning data and basic learning data as an emotion determination model to learn. In this case, the basic learning data may be pre-classified according to the type of data, and the emotion determination model may be pre-established according to the type of data. For example, the basic learning data may be pre-classified by various criteria such as an area where the learning data is generated, a time at which the learning data is generated, a size of the learning data, a genre of the learning data, a creator of the learning data, a type of object in the learning data, or the like.

In addition, the model learning unit 131-4, for example, may learn an emotion determination model using a learning algorithm including an error back-propagation method or a gradient descent method.

For example, the model learning unit 131-4 may learn an emotion determination model through supervised learning using learning data as an input value. As another example, the model learning unit 131-4 may learn an emotion determination model through unsupervised learning which finds criteria for determining emotion by learning the type of data for determining emotion without further guidance. As another example, the model learning unit 131-4 may learn an emotion determination model through reinforcement learning which uses feedback on whether the result of the emotion determination according to learning is correct.

Further, when the emotion determination model is learned, the model learning unit 131-4 may store the learned emotion determination model. In this case, the model learning unit 131-4 may store the learned emotion determination model in the memory 120 of the electronic device 100.

In this case, the memory 120 where the learned emotion determination model is stored may store commands or data associated with at least one other element of the electronic device 100 together. In addition, the memory 120 may store software and/or programs. For example, the programs may include a kernel, a middleware, an application programming interface (API) and/or an application program (or "application"), etc.

The model evaluation unit 131-5 may input evaluation data to an emotion determination model, and when the determination result outputted from the evaluation data does not satisfy predetermined criteria, control the model learning unit 131-4 to learn again. In this case, the evaluation data may be preset data for evaluating the emotion determination model.

For example, the model evaluation unit 131-5 may, among the determination result of the learned emotion determination module for the evaluation data, when the number or ratio of evaluation data with inaccurate determination result exceeds a preset threshold, evaluate that predetermined criteria is not met. For example, when the predetermined criteria are defined as a ratio of 2%, when the learned emotion determination model outputs an incorrect identification result for evaluation data exceeding 20 out of a total of 1000 evaluation data, the model evaluation portion 131-5 may evaluate that the learned emotion determination model is not suitable.

Meanwhile, when a plurality of learned emotion determination models are present, the model evaluation unit 131-5 may evaluate whether the respective learned emotion determination models satisfy predetermined criteria, and determine a model satisfying the predetermined criteria as a final emotion determination model. In this case, when there are a plurality of models satisfying the predetermined criteria, the model evaluation unit 131-5 may determine any one or a predetermined number of models previously set in descending order of the evaluation score as the final emotion determination model.

Meanwhile, at least one of the data acquisition unit 131-1, the preprocessing unit 131-2, the learning data selection unit 131-3, the model learning unit 131-4, and the model evaluation unit 131-5 in the data learning unit 131 may be manufactured in the form of a hardware chip and mounted on an electronic device. For example, at least one of the data acquisition unit 131-1, the preprocessing unit 131-2, the learning data selection unit 131-3, the model learning unit 131-4, and the model evaluation unit 131-1 may be manufactured in the form of a hardware chip exclusively used for artificial intelligence (AI), in the form of the existing universal processor (for example, CPU or application processor), or as part of IP for a specific function to be mounted on the above-described various electronic devices 100.

The data acquisition unit 131-1, the preprocessing unit 131-2, the learning data selection unit 131-3, the model learning unit 131-4, and the model evaluating unit 131-5 may be mounted on a single electronic device or on separate electronic devices, respectively. For example, some of the data acquisition unit 131-1, the preprocessing unit 131-2, the learning data selection unit 131-3, the model learning unit 131-4, and the model evaluation unit 131-5 may be included in the electronic device 100, and the rest may be included in the server 200.

Meanwhile, at least one of the data acquisition unit 131-1, the preprocessing unit 131-2, the learning data selection unit 131-3, the model learning unit 131-4, and the model evaluation unit 131-5 may be implemented as a software module. If at least one of the data acquisition unit 131-1, the preprocessing unit 131-2, the learning data selection unit 131-3, the model learning unit 131-4, and the model evaluation unit 131-5 is implemented as a software module (or a program module including instructions), the software module may be stored in a non-transitory computer readable recording medium. At least one software module may be provided by an operating system (OS) or a predetermined application. Alternatively, part of at least one software module may be provided by an OS, and the remaining part may be provided by a predetermined application.

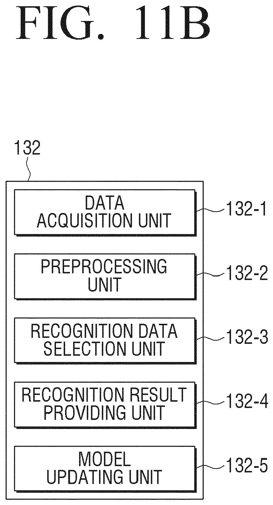

FIG. 11B is a block diagram of the emotion determination unit 132, according to some embodiments of the disclosure. Referring to FIG. 11B, the data learning unit 132 according to some embodiments may include a data acquisition unit 132-1, a preprocessing unit 132-2, a data selection unit 132-3, a determination result providing unit 132-4, and a model updating unit 132-5.

The data acquisition unit 132-1 may obtain data necessary to determine the user's actual emotion, and the preprocessing unit 132-2 may preprocess the obtained data so that the obtained data may be used to determine the user's actual emotion. The preprocessing unit 132-2 may pre-process the obtained data to a preset format so that the determination result providing unit 132-4, which will be described later, may utilize the obtained data for learning for determining the user's actual emotion.

The data selection unit 132-3 may select data necessary to determine the user's actual emotion among the preprocessed data. The selected data may be provided to the determination result providing part 132-4. The data selection unit 132-3 may select some or all of the preprocessed data according to preset criteria for determining the user's actual emotion. In addition, the data selection unit 132-3 may select data according to preset criteria by learning of the model learning unit 142-4 which will be described later.

The determination result providing unit 132-4 may apply the selected data to the data determination model to determine the user's actual emotion. The determination result providing unit 132-4 may apply the selected data to the emotion determination model by using the data selected by the data selection unit 132-3 as an input value. In addition, the determination result may be determined by the emotion determination model. For example, the determination result providing unit 132-4 may determine the user's actual emotion by inputting data capable of determining the user's actual emotion into the emotion determination model.

The model updating unit 132-5 may allow the emotion determination model to be updated, based on an evaluation on the determination result provided by the determination result providing unit 132-4. For example, the model updating unit 132-5 may provide the determination result provided by the determination result providing unit 132-4 to the model learning unit 131-4 so that the model learning unit 131-4 may thereby update the emotion determination model.

Meanwhile, at least one of the data acquisition unit 132-1, the preprocessing unit 132-2, the data selection unit 132-3, the determination result providing unit 132-4, and the model evaluation unit 132-5 in the emotion determination unit 132 may be manufactured in the form of a hardware chip and mounted on an electronic device. For example, at least one of the data acquisition unit 132-1, the preprocessing unit 132-2, the data selection unit 132-3, the determination result providing unit 132-4, and the model updating unit 132-5 may be manufactured in the form of a chip exclusively used for hardware for artificial intelligence (AI), in the form of the existing universal processor (for example, CPU or application processor), or as part of IP for a specific function to be mounted on the above-described various electronic devices 100.

The data acquisition unit 132-1, the preprocessing unit 132-2, the data selection unit 132-3, the determination result providing unit 132-4, and the model evaluation unit 132-5 may be mounted on a single electronic device or on separate electronic devices, respectively. For example, some of the data acquisition unit 132-1, the preprocessing unit 132-2, the data selection unit 132-3, the determination result providing unit 132-4, and the model updating unit 132-5 may be included in the electronic device 100 and the rest may be included in a server interlocked with the electronic device 100.

At least one of the data acquisition unit 132-1, the preprocessing unit 132-2, the data selection unit 132-3, the determination result providing unit 132-4, and the model updating unit 132-5 may be implemented as a software module. If at least one of the data acquisition unit 132-1, the preprocessing unit 132-2, the data selection unit 132-3, the determination result providing unit 132-4, and the model updating unit 132-5 is implemented as a software module (or a program module including instructions), the software module may be stored in a non-transitory computer readable recording medium. At least one software module may be provided by an operating system (OS) or a predetermined application. Alternatively, part of at least one software module may be provided by an OS, and the remaining part may be provided by a predetermined application.

Meanwhile, in FIGS. 10 to 11B, it is described with a focus on an emotion determination model for determining the user's actual emotion. However, the technical idea described above may be applied to an emotion inference model capable of determining an emotion occurrence cause of the user. Specifically, the processor 130 may include the data learning unit 131 and an emotion inference unit (not illustrated), and the processor 130 may establish an emotion inference model.

The term "unit" as used in the disclosure includes units made up of hardware, software, or firmware, and may be used interchangeably with terms such as logic, logic blocks, components, or circuits. A "module" may be an integrally constructed component or a minimum unit or part thereof that performs one or more functions. For example, a module may be configured as an application-specific integrated circuit (ASIC).

The above-described various embodiments may be implemented as a software including instructions stored on machine-readable (computer-readable) storage media. The machine is a device capable of calling a stored instruction from the storage media and operating according to the called instruction, which may include an electronic device (e.g., the electronic device A) according to the embodiments described above. When the instruction is executed by a processor, the processor may perform a function corresponding to the instruction directly or using other elements under the control of the processor. The instruction may include a code which is generated or executed by a compiler or an interpreter. The machine-readable storage media may be provided in the form of non-transitory storage media. Herein, the term "non-transitory" only denotes that the storage media does not include signals but is tangible, which does not distinguish a case where data is semi-permanently stored from a case where data is temporarily stored.

According to an embodiment, the method according to the above-described various embodiments may be provided as being included in a computer program product. The computer program product may be traded between a seller and a consumer as a product. The computer program product may be distributed in the form of machine-readable storage media (e.g., compact disc read only memory (CD-ROM)) or may be distributed online through an application store (e.g., Play Store TM). In a case of online distribution, at least part of the computer program product may be at least temporarily stored in storage media such as a server of the manufacturer, a server of the application store, or a memory of the relay server or may be temporarily generated.

The respective elements (for example, modules or programs) according to the various embodiments may be configured as a single or multiple entities, and some sub elements from among the corresponding sub elements described above may be omitted or other sub elements may be further included in the various embodiments. Alternatively or additionally, some elements (for example, modules or programs) may be integrated into one entity to perform functions performed by the respective corresponding elements in the same or similar manner. Operations performed by a module, a program, or other element, according to various embodiments, may be sequential, parallel, or both, executed iteratively or heuristically, or at least some operations may be performed in a different order, omitted, or other operations may be added.

Although embodiments have been shown and described, it will be appreciated by those skilled in the art that changes may be made to the exemplary embodiments without departing from the principles and spirit of the present disclosure. Accordingly, the scope of the present disclosure is not construed as being limited to the described embodiments, but is defined by the appended claims as well as equivalents thereto.

## Claims

1. A method for controlling an electronic device using an artificial intelligence neural network model, the method comprising:
obtaining image data and supplementary data including a user from an external terminal connected to the electronic device;
generating feature data for determining the user's actual emotion by using the image data and the supplementary data; and
determining the user's actual emotion by inputting the feature data into an emotion recognition model.

2. The method as claimed in claim 1, wherein the supplementary data includes at least one of GPS information, orientation information and hash tag information of the image, pre-inputted information on the user, past emotion of the user, and crawling information on the image.

3. The method as claimed in claim 1, wherein the feature data includes first feature data and second feature data, and
wherein the first feature data is feature data which is related to an emotion of the user excluding peripheral information, and the second feature data is feature data on peripheral information of the user.

4. The method as claimed in claim 3, wherein the determining comprises:
determining the user's emotion by inputting the first feature data into an emotion recognition model, and determining the peripheral information by inputting the second feature data into an emotion recognition model; and
determining the user's actual emotion by analyzing the determined user's emotion for the first feature data and the peripheral information on the second feature data.

5. The method as claimed in claim 1, wherein the determining the emotion comprise:
calculating a weight for past emotion of the user; and
determining a current emotion of the user by using the feature data and the weight.

6. The method as claimed in claim 1, comprising:
classifying the feature data by time or location, and storing them in a memory.

7. The method as claimed in claim 6, comprising:
in response to a user request being received from the external terminal, determining a cause of occurrence of the user's emotion by inputting the feature data into an emotion inference model; and
providing the determined emotion occurrence cause to the external terminal.

8. The method as claimed in claim 7, wherein the determining comprises:
determining a cause of occurrence of the user's emotion by time, location, character, or event.

9. An electronic device using an artificial intelligence neural network, the electronic device comprising:
a communication unit for receiving image data and supplementary data including a user from an external terminal connected to the electronic device;
a processor for determining the user's actual emotion by using the image data and the supplementary data, and determining the user's actual emotion by inputting the feature data into an emotion recognition model; and
a memory for storing the feature data.

10. The electronic device as claimed in claim 9, wherein the supplementary data includes at least one of GPS information, orientation information and hash tag information of the image, pre-inputted information on the user, past emotion of the user, and crawling information on the image.

11. The electronic device as claimed in claim 9, wherein the feature data includes first feature data and second feature data, and
wherein the first feature data is feature data which is related to an emotion of the user excluding peripheral information, and the second feature data is feature data on peripheral information of the user.

12. The electronic device as claimed in claim 11, wherein the processor determines the user's emotion by inputting the first feature data into an emotion recognition model, determining the peripheral information by inputting the second feature data into an emotion recognition model, and determining the user's actual emotion by analyzing the determined user's emotion for the first feature data and the peripheral information on the second feature data.

13. The electronic device as claimed in claim 9, wherein the processor calculates a weight for past emotion of the user, and determines a current emotion of the user by using the feature data and the weight.

14. The electronic device as claimed in claim 9, wherein the processor classifies the feature data by time, location, character, or event, and transmits them to a memory.

15. The electronic device as claimed in claim 14, wherein the processor, in response to a user request being received from the external terminal, determines a cause of occurrence of the user's emotion by inputting the feature data into an emotion inference model, and providing the determined emotion occurrence cause to the external terminal.
